# EUROPÄISCHE PATENTSCHRIFT

(11) **EP 1 541 459 B1**
(45) Veröffentlichungstag und Bekanntmachung des Hinweises auf die Patenterteilung: **03.08.2011**
(21) Anmeldenummer: 04027164.5
(22) Anmeldetag: 16.11.2004
(51) Int. Cl.: B63G 8/38

(54) **Lagerungseinheit zur Anbringung von mehreren Ausfahrgeräten an einem Unterseeboot**
Support unit for mounting several extensible devices on a submarine
Unité de support pour le montage de plusieurs dispositifs extensibles sur un sous-marin

(30) Priorität: 08.12.2003 DE 10357226
(43) Veröffentlichungstag der Anmeldung: 15.06.2005
(73) Patentinhaber: Howaldtswerke-Deutsche Werft GmbH, 24143 Kiel (DE)
(72) Erfinder: Dippel, Wulf, 24882 Schaalby (DE)
(74) Vertreter: Vollmann, Heiko

(56) Entgegenhaltungen:
- EP-A1- 0 711 702
- DD-A1- 262 472
- DE-A1- 10 032 834
- DE-A1- 10 205 788
- DE-C1- 19 940 105
- GB-A- 2 220 390

## Beschreibung

Die Erfindung betrifft eine Lagerungseinheit gemäß den im Oberbegriff des Anspruchs 1 angegebenen Merkmalen.

Ausfahrgeräte sind Maschinen, die Sensoren, wie z. B. Sehrohr, Aufklärungs- und Sendereinrichtungen eines in Sehrohrtiefe fahrenden Unterseebootes über die Wasseroberfläche heben. Hierbei wird zwischen Geräten mit bzw. ohne Druckkörperdurchführung unterschieden. Geräte mit Druckkörperdurchführung ragen entweder in den Druckkörper hinein, um die Versorgungsanschlüsse herzustellen, oder sie durchfahren den Druckkörper wie z. B. das Sehrohr. Geräte ohne Druckkörperdurchführung sind außerhalb des Druckkörpers im Turm des Unterseebootes befestigt. Lediglich die Versorgungsleitungen führen durch eine vergleichsweise einfache Druckkörperdurchführung. Abhängig von der geforderten Ausfahrhöhe werden die Sensoren gegebenenfalls mittels Teleskop-Hydraulikzylindern in die gewünschte Position gefahren.

Die Ausfahrgeräte werden im Turm des Unterseebootes starr mit dem Druckkörper verschraubt. Ihre Führung erfolgt in Rohren (Schachtgeräte) oder ab einer bestimmten Größe an Säulen (Säulengeräte). Diese besitzen an ihrem oberen Ende eine Lagerung, die sich im Allgemeinen an der Turmstruktur abstützt.

Aus EP 0 711 702 B1, das als nächstliegender Stand der Technik angesehen wird, ist eine Modulstruktur zum Halten und vertikalen Führen von Rohren im Turm eines Unterseebootes bekannt. Hierbei handelt es sich um ein standardisiertes Gehäuse, in dem in Längs- und Querrichtung verlaufende Wände vertikale Abteile bilden, in denen die Rohre in Führungen verschiebbar sind. Das Gehäuse ist über Flansche starr mit dem Druckkörper des Unterseebootes verbunden.

Bei Schockeinwirkung hat die starre Verbindung der Ausfahrgeräte und/oder ihrer Tragstruktur mit dem Druckkörper den großen Nachteil, dass die daraus resultierenden sehr hohen Kräfte direkt auf die Ausfahrgeräte wirken, was zu Beschädigungen dieser führen kann. Es müssen daher große Querschnitte gewählt werden, um die auftretenden Spannungen in zulässigen Grenzen zu halten. Die belasteten Bauteile müssen dementsprechend groß und schwer ausgelegt werden. Zunehmende Forderungen an die Schockfestigkeit führen dazu, dass die Kräfte, die auf die Befestigungsschrauben der Ausfahrgeräte wirken, schwer beherrschbar sind. Es wird daher eine große Anzahl von Schrauben benötigt, die an den Flanschen aber kaum noch integrierbar ist.

GB 2 220 390 A beschreibt eine Anordnung, bei der Ausfahrgeräte mit einer Druckkörperdurchführung in radialer Richtung vor Schockwirkungen geschützt werden sollen. Hierzu wird jedes Mastsystem separat in mehreren horizontalen Ebenen gedämpft an einer im Turm befindlichen starren Gerüststruktur befestigt. Dies erfordert einen erheblichen Fertigungs- und Montageaufwand. Die Ausrichtung von Ausfahrgeräten, die eine genaue Positionierung bezogen auf die Boots- oder Waffenmitte verlangen, ist sehr kompliziert und zeitaufwendig. All dies führt zu hohen Kosten. Ferner ist das Raumangebot im Turm stark eingeschränkt.

Hiervon ausgehend liegt der Erfindung die Aufgabe zugrunde, die Lagerung der Ausfahrgeräte im Turm eines Unterseebootes so zu verbessern, dass die Auswirkungen einer Schockbelastung minimiert werden, die Beanspruchung des Druckkörpers optimiert wird und die Herstellung eines U-Bootes besser gestaltet werden kann.

Diese Aufgabe wird durch eine Lagerungseinheit mit den im Anspruch 1 angegebenen Merkmalen gelöst. Bevorzugte Ausführungsformen ergeben sich aus den Unteransprüchen.

Die erfindungsgemäße Lösung, mehrere Ausfahrgeräte gemeinsam in einer an den Druckkörper über Dämpfungselemente verbundene Tragstruktur anzuordnen, ermöglicht einen hinreichenden Schutz der Ausfahrgeräte gegen die im Betrieb auftretenden Schockbelastungen. Gegenüber der aus dem Stand der Technik bekannten starren Verbindung der Ausfahrgeräte bzw. deren Tragstruktur mit dem Druckkörper erhöht dies die Lebensdauer der Ausfahrgeräte insbesondere bei mehrfach aufeinander folgenden Schockeinwirkungen erheblich. Die Bauteile können kleiner dimensioniert werden. Hieraus resultiert für die Befestigung ein größeres Platzangebot im Aufstellbereich und ein geringeres Gewicht im Turm. Auch die Krafteinwirkung der Ausfahrgeräte auf den Druckkörper verringert sich. Die Fundamente für die Anbringung der Dämpfungselemente auf dem Druckkörper können im Vergleich zu den bisher bekannten Bauweisen mit einer starren Befestigung am Druckkörper deutlich einfacher ausgeführt werden und erfordern somit weniger Bearbeitungszeit und Aufwand in Konstruktion und Fertigung. Die Lagerungseinheit kann orts-unabhängig vom eigentlichen Unterseeboot mit den Ausfahrgeräten ohne Druckkörperdurchführung bestückt werden. Diese vereinfachte Ausrüstung bedeutet einen verringerten Montageaufwand und eine damit verbundene Kostenersparnis.

An der Lagerungseinheit sind mehrere gemeinsam in allen Hauptbelastungsrichtungen senkrecht, quer und längs der Bootsstruktur wirkende Dämpfungselemente vorgesehen. Durch diese Anordnung werden Schockbelastungen unabhängig von ihrer Wirkungsrichtung aufgefangen und die Ausfahrgeräte geschützt. Dabei können für jede Wirkungsrichtung separate in einer Richtung wirkende Dämpfungselemente oder auch in zwei oder mehr Richtungen wirkende Dämpfungselemente angeordnet werden.

Zweckmäßigerweise ist zumindest ein Dämpfungselement vorhanden, das durch plastische und/oder elastische Verformung Energie absorbiert. Wirkt eine Schockbelastung, so wird die Energie des Stoßes vom Dämpfungselement in Form- bzw. Volumenänderungsarbeit umgewandelt. Beim Abklingen der Stoßeinwirkung nimmt das Dämpfungselement idealerweise wieder seine ursprüngliche Form an und die Ausfahrgeräte kehren in ihre Ruheposition zurück. Alternativ kann auch eine plastische Verformung der Dämpfungselemente erfolgen, wobei die Dämpfungselemente dann ersetzt werden müssen, um den ursprünglichen Zustand wiederherzustellen. Ist z.B. die Schockbeanspruchung sehr groß, kann die Elastizitätsgrenze des Dämpfungselements überschritten werden, d. h., die Verformung des Dämpfungselements ist nicht reversibel. Zu einer erneuten genauen Positionierung der Ausfahrgeräte muss dieses plastisch verformte Dämpfungselement ausgewechselt werden, Auswirkungen der großen Stoßbelastung auf die Ausfahrgeräte werden aber verhindert oder zumindest reduziert.

Bevorzugt weist das Dämpfungselement zumindest ein Federelement auf. Dessen elastische Eigenschaft, über Verformung Energie aufnehmen zu können, führt bei der darauf folgenden Entlastung durch Reibungsverluste zu einer Dämpfung. Des Weiteren können Federelemente optimal an die Betriebsbedingungen angepasst werden.

Aus diesem Grund wird das Federelement vorteilhafterweise vorgespannt. Die Vorspannung des Federelements gewährleistet, dass die Verbindung zwischen Lagerungseinheit und Druckkörper unter normalen Betriebsbeanspruchungen quasi starr ist, d. h., die hohen Genauigkeitsanforderungen an die Ausrichtung der Ausfahrgeräte moderner Unterseeboote werden erfüllt. Erst bei Schockbelastung, d.h. bei Einwirkung von Kräften, welche die Federkraft der vorgespannten Feder übersteigen, geben die vorgespannten Federelemente den Reaktionsweg frei und nach Abklingen der Schockwirkung wird vorzugsweise die Ruheposition wieder eingenommen.

Vorteilhaft wirkt das Dämpfungselement sowohl Druckbeanspruchungen als auch Zugbeanspruchungen entgegen. Wird das Dämpfungselement durch eine Schockbelastung auf Druck beansprucht, so dämpft es diese Belastung durch eine Einfederbewegung ab. Wirkt auf das gleiche Dämpfungselement ein Stoß, der zu dieser Schockbelastung um 180° versetzt angreift, Führt dies zu einer Zugbeanspruchung, die vom Dämpfungselement durch eine Ausfederbewegung gedämpft wird.

Zweckmäßigerweise weist das Dämpfungselement zumindest ein Gummi- bzw. Elastomerelement auf. Während Metallfedern nur im Hooke'schen Bereich elastische Eigenschaften aufweisen, behalten Gummi- bzw. Elastomerelemente auch weit im nichtlinearen Verformungsbereich die Fähigkeit, nahezu vollkommen reversibel zu sein, d. h., nach einem Schockereignis kehrt die Lagerungseinheit exakt in ihre Ruheposition zurück. Weitere Vorteile von Gummi- bzw. Elastomerelementen sind ihre große Arbeitsaufnahme, ihr geringes Gewicht, der geringe Wartungsaufwand sowie ihre große Lebensdauer.

Wenn es die Lagegenauigkeit der Ausfahrgeräte zulässt, ist es vorteilhaft, dass das Dämpfungselement zumindest einen Stauchbügel aufweist. Als einfaches Dämpfungsmittel ist der Stauchbügel sehr preiswert und leicht zu montieren.

Alternativ weist das Dämpfungselement bevorzugt zumindest ein Drahtseilfederelement auf, so z.B., wenn es größere Toleranzen bezüglichlich der Lage- und Rückstellungsgenauigkeit der Ausfahrgeräte erlauben.

Erfindungsgemäß sind auf einer Grundplatte zumindest zwei Ausfahrgeräte starr angeordnet. Die Ausfahrgeröte können an der Grundplatte vormontiert werden und werden dann mit der Grundplatte am Druckkörper angebracht, Die Montage der Ausfahrgeräte ohne Druckkörperdurchführung auf dieser Grundplatte kann daher ortsunabhängig vom Unterseeboot erfolgen. Auch zeitlich ist die Montage vom Bau des eigentlichen Unterseebootes völlig unabhängig. Aufgrund einer besseren Zugänglichkeit werden die Montagearbeiten erleichtert. Am Druckkörper müssen keine Fundamente für ein direktes Anflanschen der einzelnen Ausfahrgeräte bereitgestellt werden. Als Grundplatte kann auch eine entsprechend steife Rahmenstruktur verwendet werden.

An der Grundplatte greift bevorzugt mindestens ein Dämpfungselement an. Dieses verbindet die Grundplatte mit dem Druckkörper. Das Dämpfungselement schützt die auf der Grundplatte angeordneten Ausfahrgeräte vor möglichen Schockbeanspruchungen, Die auf der Grundplatte angeordneten Bauteile können kleiner und damit leichter ausgeführt werden. Damit verringert sich die Kraftwirkung der Ausfahrgeräte auf den Druckkörper. Des Weiteren kann die Schraubenverbindung der Ausfahrgeräte mit der Grundplatte gegenüber einer starren Verbindung der Ausfahrgeräte mit dem Grundkörper erheblich kleiner dimensioniert werden.

Zweckmäßigerweise weist die Tragstruktur eine Grundplatte, Seitenwände und eine Deckplatte auf, welche eine kastenförmige Tragstruktur bilden. Die Tragstruktur muss stabil und steif genug sein, um die Belastung durch die Ausfahrgeräte aufnehmen zu können. Innerhalb der Tragstruktur verlaufen in vertikaler Richtung die Führungsrohre bzw. Führungssäulen der Ausfahrgeräte. Für Ausfahrgeräte mit einer Druckkörperdurchführung können in der Grund- und Deckplatte Durchbrüche vorgesehen sein, durch die diese ausgefahren werden können. Die Durchbrüche sind so groß gestaltet, dass bei jeder möglichen Relativbewegung der Tragstruktur zu diesen feststehenden Ausfahrgeräten eine Kollision verhindert wird. An der Deckplatte befinden sich weitere Durchbrüche, durch die die Ausfahrgeräte ohne Druckkörperdurchführung ausgefahren werden können. Die obere Lagerung dieser Geräte ist an der Deckplatte vorgesehen, während die obere Lagerung der Ausfahrgeräte mit Druckkörperdurchführung üblicherweise an der Turmstruktur angebunden sein muss. Die Tragstruktur ist vorzugsweise in Richtung aller Raumkoordinaten mit dem Druckkörper und der starren Turmstruktur über Dämpfungselemente verbunden. Im Falle einer Schockbelastung sind so alle in der Tragstruktur montierten Ausfahrgeräte geschützt.

Bevorzugt sind in der Lagerungseinheit zumindest zwei Ausfahrgeräte über Verstrebungen starr miteinander verbunden. Mindestens eine Verstrebung bildet so eine steife Horizontalverbindung zwischen zwei Ausfahrgeräten. Zum Beispiel sind die Führungsrohre bzw. Führungssäulen der Ausfahrgeräte auf der Grundplatte starr befestigt. Über Verstrebungen bzw. Querverstrebungen sind sie horizontal dergestalt miteinander verbunden, dass sie sich gegenseitig abstützen. Die so gebildete Tragstruktur ist über Dämpfungselemente auf dem Fundament eines Turmgerüstes angebracht, welches mit dem Druckkörper starr verbunden ist. Aufgrund der hohen Steifigkeit der Tragstruktur kann auf eine Deckplatte und Seitenwände verzichtet werden. Dies bedeutet einen geringeren Material- und Fertigungsaufwand.

Vorteilhaft bildet eine Sektion eines Turmes des Unterseebootes, vorzugsweise der gesamte Turm, die Tragstruktur für die Ausfahrgeräte. Beispielsweise weist das Turmgerüst hierzu in seinem vertikalen Querschnitt eine rahmenförmige Struktur auf. Die Struktur besteht beispielsweise aus einer Grundplatte in Bodennähe des Turmes, den Seitenverstrebungen für die Außenwände des Turmes, den Außenwänden des Turms und einer Deckplatte im Bereich des oberen Turmendes. Die Ausfahrgeräte sind starr auf der Grundplatte angeordnet. Über Schutzrohre werden sie durch die Deckplatte geführt, an der sie fest gelagert sind. Das Turmgerüst weist keine starre Verbindung mit dem Druckkörper auf. Zu diesem Zweck befindet sich auf dem Druckkörper ein starr mit diesem verbundenes Fundament, auf dem die Turmsektion bzw. der Turm gedämpft gelagert ist. Die Dämpfung erfolgt über Dämpfungselemente, die zwischen der Grundplatte des Turmgerüstes und dem Fundament am Druckkörper angeordnet sind. Die Dämpfungselemente schützen die Ausfahrgeräte im Falle einer Schockbelastung vor möglichen Beschädigungen.

Bevorzugt besteht keine Kontaktfläche zwischen der Turmverkleidung und dem Druckkörper. Die Turmverkleidung ist so gestaltet, dass im montierten Zustand des Turmes auf dem Druckkörper zwischen der Turmverkleidung und der Außenwand des Druckkörpers ein Spalt besteht. Dieser ist so groß gewählt, dass durch eine Schockbelastung hervorgerufene Bewegungen des gedämpften Turmes nicht zu einer Kollision der Turmverkleidung mit dem Druckkörper führen können. In dem Spalt zwischen Turmverkleidung und Druckkörper können ferner Spaltdichtungen, z.B. in Form elastischer Dichtungen, vorgesehen werden, welche die Bewegung im Schockfall nicht behindern.

Vorteilhaft sind die Ausfahrgeräte an Ihrem, dem Druckkörper abgewandten Ende, starr mit einer Deckplatte verbunden. Die Lagerungseinheit der Ausfahrgeräte wird so z.B. durch eine starre Tragstruktur, bestehend aus einer am Turmboden befindlichen Grundplatte, den Schutzrohren der Ausfahrgeräte und einer Deckplatte, die am oberen Ende der Schutzrohre angebracht ist, gebildet. Über Dämpfungselemente ist die Lagerungseinheit am Fundament eines starr mit dem Grundkörper verbundenen Turmgerüstes befestigt. Bei genügend steifer Ausführung der Führungsrohre oder Führungssäulen der Ausfahrgeräte sind so Seitenwände der Lagerungseinheit nicht erforderlich.

Zweckmäßigerweise weisen die Ausfahrgeräte und/oder die Tragstruktur an ihrem, dem Druckkörper abgewandten Ende, zumindest ein Dämpfungselement zur Verbindung mit Teilen des Turms des Unterseeboots auf, welche starr mit dem Druckkörper verbunden sind. Das Dämpfungselement stellt vorzugsweise eine horizontale Verbindung zwischen der Lagerungseinheit der Ausfahrgeräte und dem Turmgerüst her. Da die bei einer Schockbelastung an einem Ausfahrgerät bzw. einer Tragstruktur auftretenden Momente an dem oberen Ende am größten sind, wirkt hier das Dämpfungselement den größtmöglichen durch eine Schockbelastung hervorgerufenen Auslenkungen des Ausfahrgerätes und/oder der Tragstruktur entgegen, d.h., Kipp- bzw. Pendelbewegungen werden verhindert oder minimiert.

Die Erfindung ist nachfolgend anhand von in den Zeichnungen dargestellten Ausführungsbeispielen erläutert. Es zeigen
- Fig. 1: einen perspektivischen Teilschnitt einer Lagerungseinheit im Turm eines Unterseebootes,
- Fig. 2: eine Schnittansicht einer Lagerungseinheit mit Verstrebungen zwischen den Ausfahrgeräten,
- Fig. 3: eine Schnittansicht einer gedämpft gelagerten Sektion des Turms eines Unterseebootes,
- Fig. 4: eine Schnittansicht einer am Turmende gedämpften Lagerungseinheit,
- Fig. 5: ein Teilschnitt eines Gummifederpakets,
- Fig. 6: einen Stauchbügel.

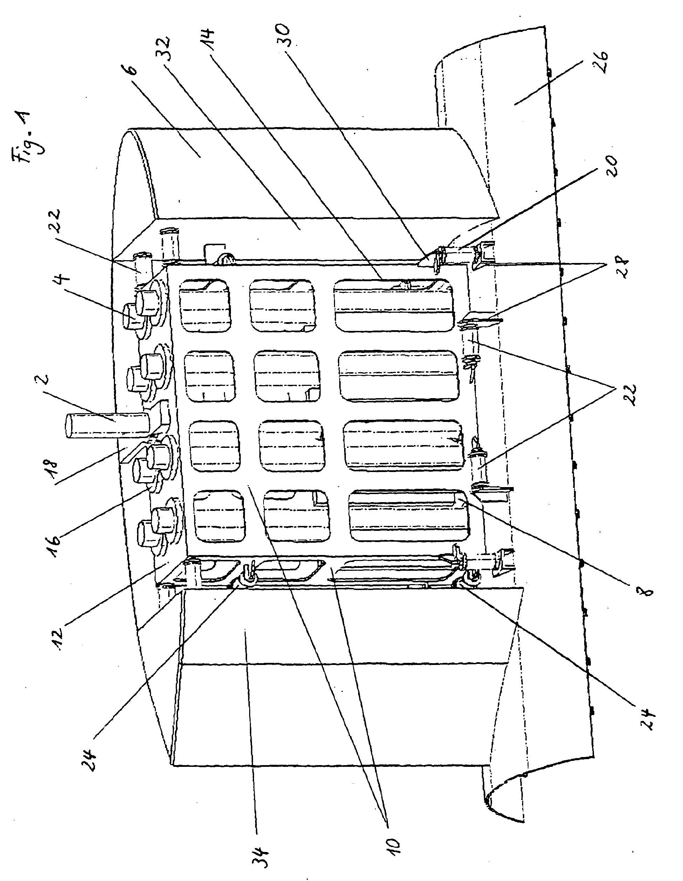

Die Figur 1 zeigt eine Lagerungseinheit von mehreren Ausfahrgeräten 2 u. 4 im Turm 6 eines Unterseebootes. Die Lagerungseinheit besitzt eine kastenförmige Tragstruktur, die aus einer Grundplatte 8, Seitenwänden 10 sowie einer Deckplatte 12 besteht. Innerhalb der Grundplatte 8 und der Deckplatte 12 befinden sich Durchbrüche, durch die die Ausfahrgeräte 2 mit einer Druckkörperdurchführung ausfahrbar sind. Diese Durchbrüche sind so groß ausgelegt, dass es im Fall einer Schockbelastung zu keiner Kollision zwischen den Ausfahrgeräten 2 und der Grundpatte 8 und/oder der Deckplatte 12 kommen kann. Auch die Seitenwände 10 weisen Durchbrüche 14 auf. Diese dienen der Gewichtsreduzierung und einer besseren Zugänglichkeit zum Inneren der Lagerungseinheit. Die Ausfahrgeräte 4 ohne Druckkörperdurchführung sind auf der Grundplatte 8 starr angeordnet. Durch Durchbrüche in der Deckplatte 12 sind sie nach oben ausfahrbar. Ihre obere Lagerung 16 ist direkt an der Deckplatte 12 angeordnet. Dahingegen ist die obere Lagerung 18 der Ausfahrgeräte 2 mit einer Druckkörperdurchführung direkt an den starr mit dem Druckkörper 26 verbundenen Turm 6 angebunden. Die gesamte Lagerungseinheit ist über Dämpfungselemente 20, 22 u. 24 auf dem Druckkörper 26 angeordnet. Hierbei wirken die Dämpfungselemente 20 Schockbelastungen senkrecht zur Bootsstruktur, die Dämpfungselemente 22 Schockbelastungen längs- und die Dämpfungselemente 24 quer zur Bootsstruktur entgegen. Die Fundamente für die Dämpfungselemente 20, 22 u. 24 werden durch Profilstahlelemente 28 gebildet. Diese sind starr mit dem Druckkörper 26 verbunden. Die Anbindung der Dämpfungselemente 20, 22 u. 24 an die Lagerungseinheit erfolgt über Profilstahlelemente 30 nahe der Grundplatte 8, wobei die Dämpfungselemente 20 senkrecht an den Ecken der Grundplatte 8, mindestens zwei Dämpfungselement 22 um 180° versetzt an jeder Seitenwand 10 längs zur Bootstruktur und die Dämpfungselemente 24 an jeder Seitenwand 10 quer zur Bootstruktur angeordnet sind. Im oberen Bereich der Tragstruktur nahe der Deckplatte 12 ist die Lagerungseinheit über Dämpfungselemente 20 u. 22 an das vordere Turmgerüst 32 und das hintere Turmgerüst 34 angebunden. Die gesamte Lagerungseinheit ist somit über die Dämpfungselemente 20, 22 u. 24 beweglich im Inneren der Turmverkleidung angeordnet.

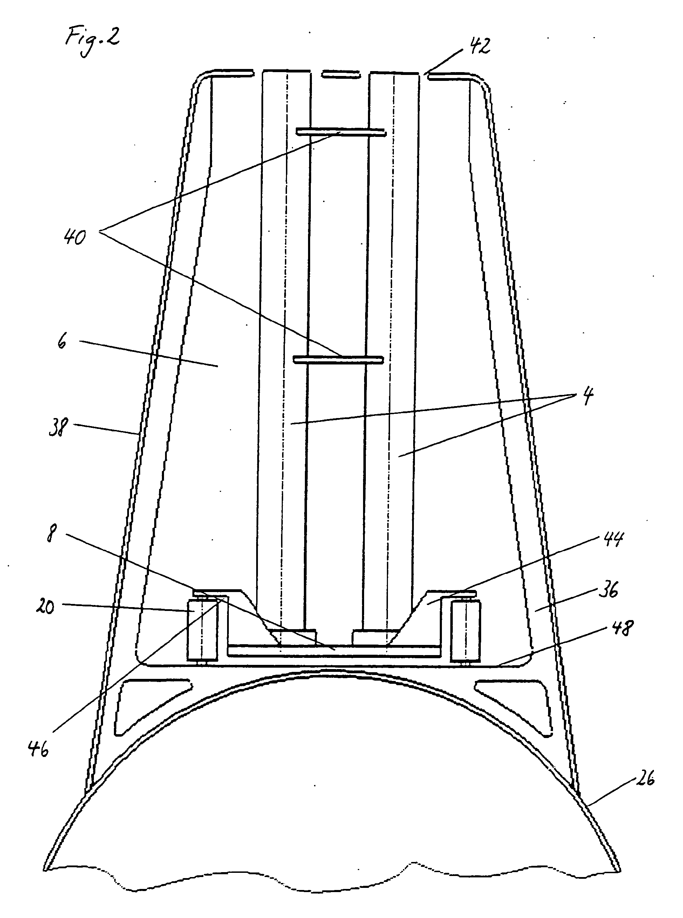

Figur 2 zeigt eine Schnittansicht einer alternativen Ausführungsform der Lagerungseinheit mit Schachtgeräten. An dem Druckkörper 26 des Unterseebootes ist ein Turmgerüst 36 starr befestigt. An den Außenseiten des Turmgerüstes 36 ist die Turmverkleidung 38 angebracht. Im Inneren des Turms 6 befindet sich die Lagerungseinheit für die Ausfahrgeräte 4 ohne Druckkörperdurchführung. Auf der Grundplatte 8 der Lagerungseinheit sind die Ausfahrgeräte 4 starr angeordnet. Über Verstrebungen 40 sind sie starr miteinander verbunden. Die Verstrebungen 40 sind horizontal angeordnet und verbinden die Ausfahrgeräte 4 sowohl im Mittelbereich als auch im Bereich ihres oberen Endes. Die Turmverkleidung 38 weist an der Turmspitze Durchbrüche 42 auf, durch die die Ausfahrgeräte 4 ausgefahren werden können. An der Grundplatte 8 der Lagerungseinheit sind Winkelelemente 44 derart starr befestigt, dass sie Auflagerflächen 46 bilden, die in Richtung der Turmspitze verschoben, parallel zur Grundplatte 8 verlaufen. Zwischen den Auflagerflächen 46 und dem Fundament des Turmgerüstes 48 sind Dämpfungselemente 20 angeordnet, auf denen die Lagerungseinheit schockgedämpft gelagert ist. Auch bei dieser Anordnung besteht keine starre Verbindung zwischen der Lagerungseinheit mit den Ausfahrgeräten 4 und dem Turmgerüst 36 mit der Turmverkleidung 38.

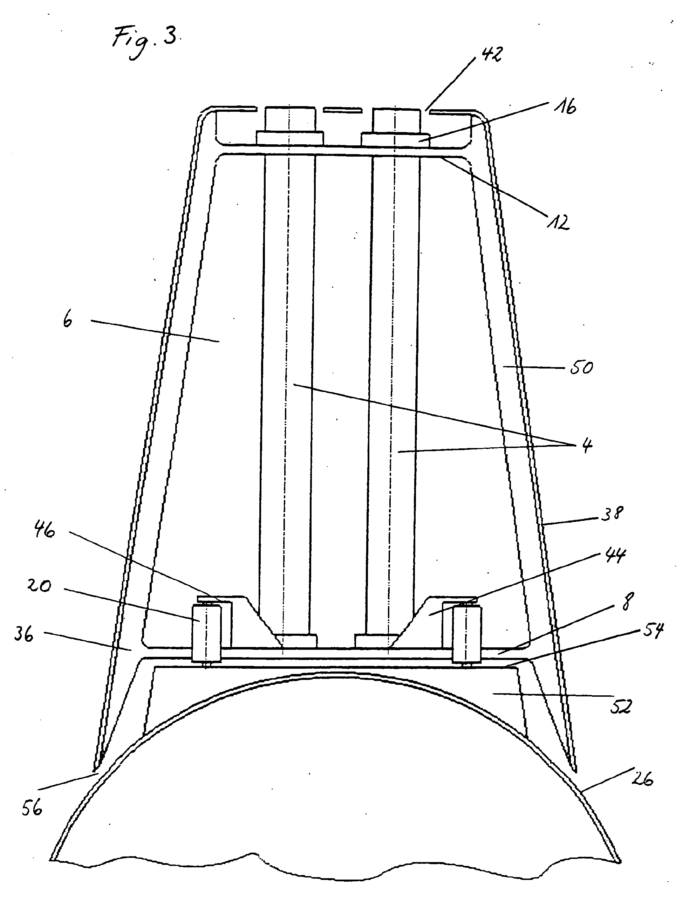

In Figur 3 ist eine Schnittansicht einer weiteren Ausführungsvariante der Lagerungseinheit mit Schachtgeräten, die aber auch für die Ausrüstung mit Säulengeräten geeignet ist, dargestellt, in der eine Sektion eines Turmes 6 des Unterseebootes, vorzugsweise der gesamte Turm 6, die Tragstruktur für die Ausfahrgeräte 4 ohne Druckkörperdurchführung bildet. Das Turmgerüst 36 weist in seinem vertikalen Querschnitt eine starre rahmenförmige Struktur auf. Diese besteht aus einer Grundplatte 8 in Bodennähe des Turmes 6, den Seitenverstrebungen 50 für die Turmverkleidung 38, der Turmverkleidung 38 und einer Deckplatte 12 im Bereich des oberen Turmendes. Die Ausfahrgeräte 4 sind starr auf der Grundplatte 8 befestigt. Die obere Lagerung 16 der Ausfahrgeräte ist an der Deckplatte 12 fest angeordnet. An der Turmspitze weist die Turmverkleidung 38 Durchbrüche 42 auf, durch die die Ausfahrgeräte 4 ausgefahren werden können. An der Grundplatte 8 des Turmgerüstes 36 sind Winkelelemente 44 derart starr befestigt, dass sie Auflagerflächen 46 bilden, die in Richtung der Turmspitze verschoben, parallel zur Grundplatte 8 verlaufen. Auf dem Druckkörper 26 ist ein Fundament 52 fest angeordnet, das eine Auflagerfläche 54 besitzt. Zwischen den Auflagerflächen 46 und den Auflagerflächen 54 sind die Dämpfungselemente 20 angeordnet, die die Ausfahrgeräte im Falle einer Schockbelastung vor möglichen Beschädigungen schützen. Zwischen dem Druckkörper 26 und der Turmverkleidung 38 besteht ein Spalt 56. Dieser ist so groß, dass durch eine Schockbelastung hervorgerufene Bewegungen des gedämpften Turmes nicht zu einer Kollision der Turmverkleidung mit dem Druckkörper führen können. Gemäß dieser Ausführungsform ist somit der gesamte Turm 6 bzw. eine Sektion des Turmes einschließlich der Turmverkleidung 38 relativ zum Druckkörper 26 gedämpft beweglich.

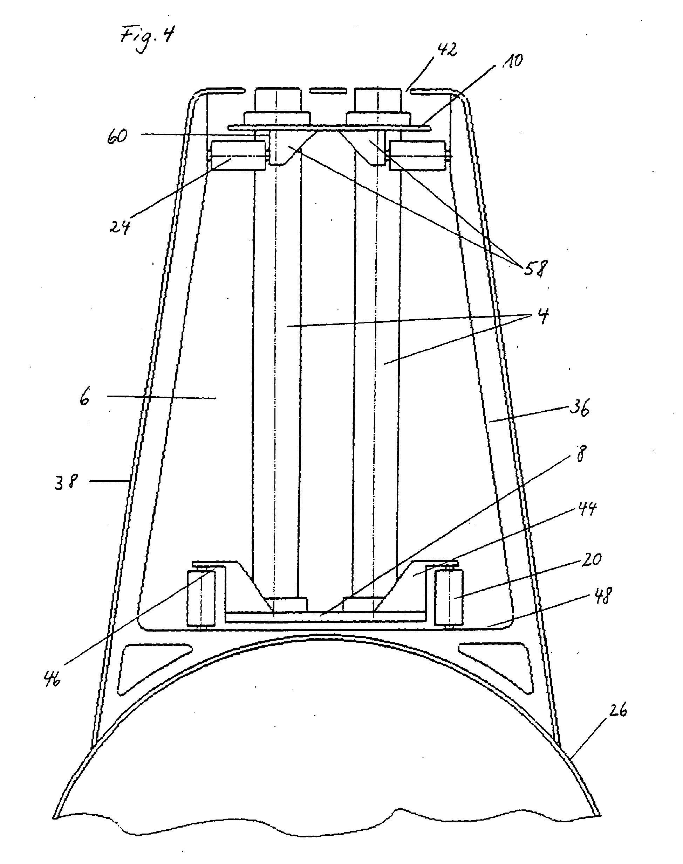

Figur 4 zeigt eine Schnittansicht einer Alternativausführung der Lagerungseinheit gemäß Figur 2, in der die Lagerungseinheit am oberen Teil des Turms gedämpft angelenkt ist. An dem Druckkörper 26 des Unterseebootes ist ein Turmgerüst 36 starr befestigt. An den Außenseiten des Turmgerüstes 36 ist die Turmverkleidung 38 angebracht. Diese weist an der Turmspitze Durchbrüche 42 auf, durch die die Ausfahrgeräte 4 ausgefahren werden können. Im Inneren des Turms 6 befindet sich die Lagerungseinheit für die Ausfahrgeräte 4 ohne Druckkörperdurchführung. Auf der Grundplatte 8 der Lagerungseinheit sind die Ausfahrgeräte 4 starr angeordnet. An der Grundplatte 8 der Lagerungseinheit sind Winkelelemente 44 derart starr befestigt, dass sie Auflagerflächen 46 bilden, die in Richtung der Turmspitze verschoben, parallel zur Grundplatte 8 verlaufen. Zwischen den Auflagerflächen 46 und dem Fundament des Turmgerüstes 48 sind Dämpfungselemente 20 angeordnet, auf denen die Lagerungseinheit schockgedämpft gelagert ist. Im Bereich der Turmspitze werden die Ausfahrgeräte 4 durch eine horizontal angeordnete Deckplatte 10 gehalten. Hierzu sind die Ausfahrgeräte 4 durch Durchbrüche der Deckplatte 10 geführt und nahe ihrem oberen Ende starr mit der Deckplatte 10 verbunden. An der Unterseite der Deckplatte 10 befinden sich Befestigungselemente 58. Diese bilden Auflagerflächen 60, die parallel zu den Innenseiten des Turmgerüstes 36 verlaufen. Zwischen den Auflagerflächen 60 und den Innenseiten des Turmgerüstes 36, welches starr mit dem Druckkörper verbunden ist, sind Dämpfungselemente 24 angeordnet, die die Lagerungseinheit schockgedämpft quer zur Längsachse des Unterseebootes gegen das Turmgerüst 36 abstützen.

Die vorangehend beschriebenen Grund- und Deckplatten müssen nicht als einstückige Plattenelemente ausgebildet sein, vielmehr kann es sich auch bei diesen Bauteilen um aus mehreren Elementen zusammengesetzte Strukturen, z.B. Rahmenstrukturen handeln.

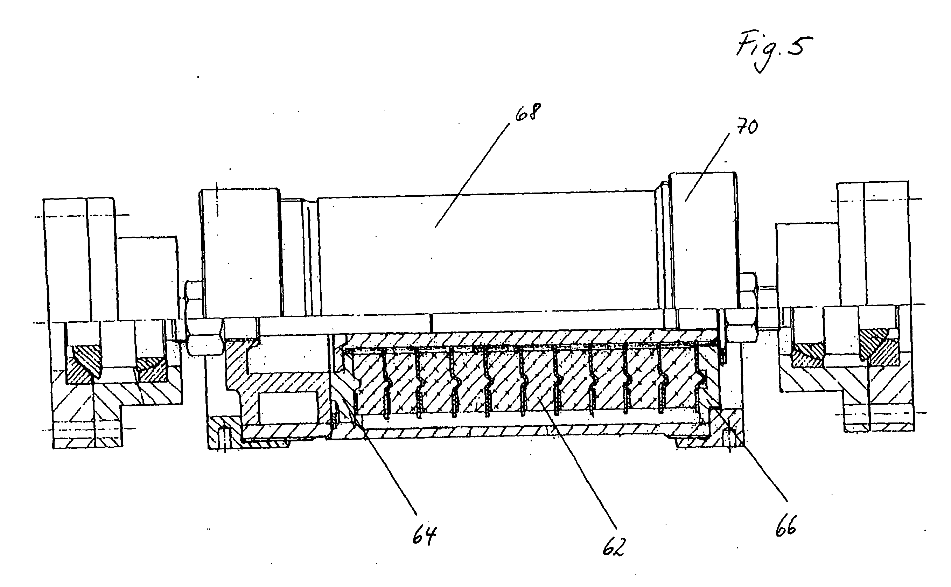

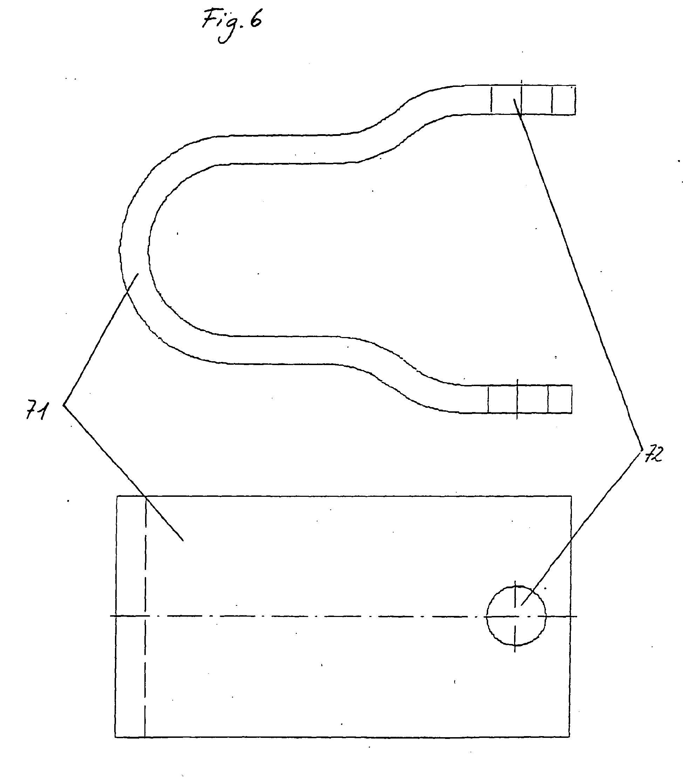

Mögliche Ausgestaltungen der Dämpfungselemente 20, 22, 24 wurden anhand von Fig. 5 und 6 beschrieben. Ein Teilschnitt eines Gummifederpakets ist in Figur 5 dargestellt. Hier sind mehrere ringförmige Gummifederscheiben 62 zwischen einer vorderen Druckscheibe 64 und einer hinteren Druckscheibe 66 zu einem Federpaket zusammengefasst und in einem zylinderförmigen Gehäuse 68 angeordnet. Die beiden Enden des Gehäuses 68 besitzen ein Außengewinde auf die Überwurfmuttern 70 aufgeschraubt sind. Über die Anlage der Druckscheiben 64 u. 66 am Gehäuse bzw. der Überwurfmutter 70 kann das Gummifederpaket vorgespannt werden.

Figur 6 zeigt einen Stauchbügel 71. Hierbei handelt es sich um eine U-förmige Bügelfeder. Diese ist an ihrem offenen Ende aufgeweitet. Jeder Federbügel besitzt an seinem aufgeweiteten Ende ein Durchgangsloch 72 für die Befestigungsschrauben.

Die in Fig.5 und 6 gezeigten Dämpfungselemente wirken jeweils nur entlang einer Achse. Daher werden, wie beschrieben, mehrere solcher Dämpfungselemente in den jeweiligen Wirkungsrichtungen zwischen Lagerungseinheit und der starren Struktur bzw. dem Druckkörper 6 des Unterseebootes angeordnet, um Bewegungen der Lagerungseinheit bei Belastung in allen Raumrichtungen dämpfen zu können.

### Bezugszeichenliste

- 2: Ausfahrgerät mit Druckkörperdurchführung
- 4: Ausfahrgerät ohne Druckkörperdurchführung
- 6: Turm
- 8: Grundplatte
- 10: Seitenwand
- 12: Deckplatte
- 14: Durchbruch
- 16: Lagerung
- 18: Lagerung
- 20: Dämpfungselement mit Wirkrichtung senkrecht zur Bootsstruktur
- 22: Dämpfungselement mit Wirkrichtung längs zur Bootsstruktur
- 24: Dämpfungselement mit Wirkrichtung quer zur Bootsstruktur
- 26: Druckkörper
- 28: Profilstahlelement
- 30: Profilstahlelement
- 32: vorderes Turmgerüst
- 34: hinteres Turmgerüst
- 36: Turmgerüst
- 38: Turmverkleidung
- 40: Verstrebung
- 42: Durchbruch
- 44: Winkelelement
- 46: Auflagerfläche
- 48: Fundament des Turmgerüstes
- 50: Seitenverstrebung
- 52: Fundament
- 54: Auflagerfläche
- 56: Spalt
- 58: Befestigungselement
- 60: Auflagerfläche
- 62: Gummifederscheibe
- 64: vordere Druckscheibe
- 66: hintere Druckscheibe
- 68: Gehäuse
- 70: Überwurfmuttern
- 71: Stauchbügel
- 72: Durchgangsloch

## Patentansprüche

1. Lagerungseinheit zur Anbringung von mehreren Ausfahrgeräten (4) an einem Unterseeboot, **dadurch gekennzeichnet, dass** die Lagerungseinheit eine Tragstruktur mit einer Grundplatte (8) aufweist, in welcher zumindest zwei Ausfahrgeräte (4) auf der Grundplatte (8) starr angeordnet sind, wobei die Lagerungseinheit zumindest ein Dämpfungselement (20, 22, 24) zur Verbindung der Tragstruktur mit einem Druckkörper (26) eines Unterseebootes aufweist.

2. Lagerungseinheit nach Anspruch 1, **dadurch gekennzeichnet, dass** mehrere gemeinsam in allen Nauptbelastungsrichtungen senkrecht, quer und längs der Bootsstruktur wirkende Dämpfungselemente (20, 22, 24) vorgesehen sind.

3. Lagerungseinheit nach Ansprüchen 1 oder 2, **dadurch gekennzeichnet, dass** sie zumindest ein Dämpfungselement (20, 22, 24) aufweist, das durch plastische und/oder elastische Verformung Energie absorbiert.

4. Lagerungseinheit noch einem der vorangehenden Ansprüche, **dadurch gekennzeichnet, dass** das Dämpfungselement (20, 22, 24) zumindest ein Federelement aufweist.

5. Lagerungseinheit noch Anspruch 4, **dadurch gekennzeichnet, dass** das Federelement vorgespannt ist.

6. Lagerungseinheit nach einem der vorangehenden Ansprüche, **dadurch gekennzeichnet, dass** das Dämpfungselement (20, 22, 24) sowohl Druckbeanspruchungen als auch Zugbeanspruchungen entgegenwirkt.

7. Lagerungseinheit nach einem der vorangehenden Ansprüche, **dadurch gekennzeichnet, dass** das Dämpfungselement (20, 22, 24) zumindest ein Gummi bzw. Elastomerelement (62) aufweist.

8. Lagerungseinheit nach einem der vorangehenden Ansprüche, **dadurch gekennzeichnet, dass** das Dämpfungselement (20, 22, 24) zumindest einen Stauchbügel (71) aufweist,

9. Lagerungseinheit nach einem der vorangehenden Ansprüche, **dadurch gekennzeichnet, dass** das Dämpfungselement (20, 22, 24) zumindest ein Drahtseilfederelement aufweist.

10. Lagerungseinheit nach einem der vorangehenden Ansprüche, **dadurch gekennzeichnet, dass** zumindest ein Dämpfungselement (20, 22, 24) an der Grundplatte (8) angreift.

11. Lagerungseinheit nach einem der vorangehenden Ansprüche. **dadurch gekennzeichnet, dass** die Tragstruktur eine Grundplatte (8), Seitenwände (10) und eine Deckplatte (12) aufweist, welche eine kastenförmige Tragstruktur bilden.

12. Lagerungseinheit nach einem der vorangehenden Ansprüche, **dadurch gekennzeichnet, dass** zumindest zwei Ausfahrgeräte (4) über Verstrebungen (40) starr miteinander verbunden sind.

13. Lagerungseinheit nach einem der vorangehenden Ansprüche, **dadurch gekennzeichnet, dass** eine Sektion eines Turmes (6) des Unterseebootes, vorzugsweise der gesamte Turm (6), die Tragstruktur für die Ausfahrgeräte (4) bildet.

14. Lagerungseinheit nach Anspruch 14, **dadurch gekennzeichnet, dass** keine Kontaktflächen zwischen der Turmverkleidung (38) und dem Druckkörper (26) bestehen, wobei im Falle eines Spaltes zwischen Turmverkleidung und Druckkörper vorzugsweise Abdichtungen, die die Bewegung im Schockfall nicht behindern, vorgesehen sind.

15. Lagerungseinheit nach einem der vorangehenden Ansprüche, **dadurch gekennzeichnet, dass** die Ausfahrgeräte (4) an ihrem, dem Druckkörper (26) abgewandten Ende, starr mit einer Deckplatte (12) verbunden sind.

16. Lagerungseinheit nach einem der vorangehenden Ansprüche, **dadurch gekennzeichnet, dass** die Ausfahrgeräte (4) und/oder die Tragstruktur an ihrem, dem Druckkörper (26) abgewandten Ende, zumindest ein Dämpfungselement (20, 22, 24) zur Verbindung mit Teilen des Turms (6) des Unterseeboots aufweisen, welche starr mit dem Druckkörper (26) verbunden sind.

17. Unterseeboot mit einem Druckkörper (26) und zumindest zwei Ausfahrgeräten (4), **dadurch gekennzeichnet, dass** die Ausfahrgeräte (4) über eine Lagerungseinheit gemäß einem der vorangehenden Ansprüche gemeinsam an den Druckkörper (26) befestigt sind.

## Claims

1. A mounting unit for attaching several extension apparatus (4) on a submarine, **characterised in that** the mounting unit comprises a support structure with a base plate (8), in which structure at least two extension apparatus (4) are rigidly arranged on the base plate (8), wherein the mounting unit comprises at least one damping element (20, 22, 24) for connecting the support structure to a pressure hull (26) of a submarine.

2. A mounting unit according to claim 1, **characterised in that** several damping elements (20, 22, 24) are provided, which act commonly in all main loading directions perpendicularly, transversely and longitudinally to the submarine structure.

3. A mounting unit according to claims 1 or 2, **characterised in that** it comprises at least one damping element (20, 22, 24) which absorbs energy by way of plastic and/or elastic deformation.

4. A mounting unit according to one of the preceding claims, **characterised in that** the damping element (20, 22, 24) comprises at least one spring element.

5. A mounting unit according to claim 4, **characterised in that** the spring element is biased.

6. A mounting unit according to one of the preceding claims, **characterised in that** the damping element (20, 22, 24) counteracts compressive loads as well as tensile loads.

7. A mounting unit according to one of the preceding claims, **characterised in that** the damping element (20, 22, 24) comprises at least one rubber or elastomer element (62).

8. A mounting unit according to one of the preceding claims, **characterised in that** the damping element (20, 22, 24) comprises at least one compression bow (71).

9. A mounting unit according to one of the preceding claims, **characterised in that** the damping element (20, 22, 24) comprises at least one wire cable spring element.

10. A mounting unit according to one of the preceding claims, **characterised in that** at least one damping element (20, 22, 24) engages on the base plate (8).

11. A mounting unit according to one of the preceding claims, **characterised in that** the support structure comprises a base plate (8), side walls (10) and a cover plate (12), which form a box-like support structure.

12. A mounting unit according to one of the preceding claims, **characterised in that** at least two extension apparatus (4) are connected to one another in a rigid manner via struts (40).

13. A mounting unit according to one of the preceding claims, **characterised in that** a section of a tower (6) of the submarine, preferably the complete tower (6), forms the support structure for the extension apparatus (4).

14. A mounting unit according to claim 14, **characterised in that** no contact surfaces exist between the tower casing (38) and the pressure hull (26), wherein in the case of a gap between the tower casing and pressure hull, preferably provided seals are which do not inhibit the movement in the case of shock.

15. A mounting unit according to one of the preceding claims, **characterised in that** the extension apparatus (4) at their end which is away from the pressure hull (26), are connected to a cover plate (12) in a rigid manner.

16. A mounting unit according to one of the preceding claims, **characterised in that** the extension apparatus (4) and/or the support structure at their end which is away from the pressure hull (26), comprise at least one damping element (20, 22, 24) for connection to parts of the tower (6) of the submarine which are connected to the pressure hull (26) in a rigid manner.

17. A submarine with a pressure hull (26) and at least two extension apparatus (4), **characterised in that** the extension apparatus (4) are fastened commonly onto the pressure hull (26) via a mounting unit according to one of the preceding claims.

## Revendications

1. Unité de support pour le montage de plusieurs dispositifs extensibles (4) sur un sous-marin, **caractérisée en ce que** l'unité de support présente une structure porteuse pourvue d'une plaque de base (8), dans laquelle au moins deux dispositifs extensibles (4) sont disposés fixement sur la plaque de base (8), l'unité de support comportant au moins un élément d'amortissement (20, 22, 24) pour le raccordement de la structure porteuse à une coque pressurisée (26) d'un sous-marin.

2. Unité de support selon la revendication 1, **caractérisée en ce que** sont prévus plusieurs éléments d'amortissement (20, 22, 24) agissant conjointement dans toutes les directions de sollicitation principales, perpendiculaire, transversale et longitudinale, de la structure du sous-marin.

3. Unité de support selon la revendication 1 ou 2, **caractérisée en ce qu'**elle présente au moins un élément d'amortissement (20, 22, 24) qui absorbe de l'énergie par déformation plastique et/ou élastique.

4. Unité de support selon l'une des revendications précédentes, **caractérisée en ce que** l'élément d'amortissement (20, 22, 24) présente au moins un élément ressort.

5. Unité de support selon la revendication 4, **caractérisée en ce que** l'élément ressort est précontraint.

6. Unité de support selon l'une des revendications précédentes, **caractérisée en ce que** l'élément d'amortissement (20, 22, 24) s'oppose aussi bien aux contraintes de compression qu'aux sollicitations de traction.

7. Unité de support selon l'une des revendications précédentes, **caractérisée en ce que** l'élément d'amortissement (20, 22, 24) présente au moins un élément en caoutchouc ou en élastomère (62).

8. Unité de support selon l'une des revendications précédentes, **caractérisée en ce que** l'élément d'amortissement (20, 22, 24) présente au moins un étrier de compression (71).

9. Unité de support selon l'une des revendications précédentes, **caractérisée en ce que** l'élément d'amortissement (20, 22, 24) présente au moins un élément ressort en fil métallique.

10. Unité de support selon l'une des revendications précédentes, **caractérisée en ce qu'**au moins un élément d'amortissement (20, 22, 24) vient en prise sur la plaque de base (8).

11. Unité de support selon l'une des revendications précédentes, **caractérisée en ce que** la structure porteuse présente une plaque de base (8), des parois latérales (10) et une plaque de recouvrement (12) qui forment une structure porteuse en forme de caisson.

12. Unité de support selon l'une des revendications précédentes, **caractérisée en ce qu'**au moins deux dispositifs extensibles (4) sont reliés entre eux de manière rigide par le biais d'entretoisements (40).

13. Unité de support selon l'une des revendications précédentes, **caractérisée en ce qu'**une section d'une tourelle (6) du sous-marin, de préférence l'ensemble de la tourelle (6), forme la structure porteuse des dispositifs extensibles (4).

14. Unité de support selon la revendication 14, **caractérisée par** l'absence de surfaces de contact entre le revêtement (38) de la tourelle et la coque pressurisée (26), et en ce que, dans le cas d'un interstice entre le revêtement de la tourelle et la coque pressurisée, sont prévues, de préférence, des étanchéités qui n'entravent pas le mouvement en cas de choc.

15. Unité de support selon l'une des revendications précédentes, **caractérisée en ce que** les dispositifs extensibles (4) sont reliés, à leur extrémité opposée à la coque pressurisée (26), de manière rigide à une plaque de recouvrement (12).

16. Unité de support selon l'une des revendications précédentes, **caractérisée en ce que** les dispositifs extensibles (4) et/ou la structure porteuse présentent, à leur extrémité opposée à la coque pressurisée (26), au moins un élément d'amortissement (20, 22, 24) pour raccordement à des parties de la tourelle (6) du sous-marin qui sont reliées de manière rigide à la coque pressurisée (26).

17. Sous-marin équipé d'une coque pressurisée (26) et d'au moins deux dispositifs extensibles (4), **caractérisé en ce que** les dispositifs extensibles (4) sont fixés ensemble sur la coque pressurisée (26) par l'intermédiaire d'une unité de support selon l'une des revendications précédentes.
